# EUROPÄISCHE PATENTSCHRIFT

(11) **EP 0 814 970 B1**
(45) Veröffentlichungstag und Bekanntmachung des Hinweises auf die Patenterteilung: **21.04.1999**
(21) Anmeldenummer: 96904726.5
(22) Anmeldetag: 29.02.1996
(51) Int. Cl.: B60N 2/48

(54) **INDIVIDUELL ANPASSBARE KOPFSTÜTZE FÜR SITZE MIT RÜCKENLEHNE**
INDIVIDUALLY ADAPTABLE HEADREST FOR SEATS WITH BACKS
APPUI-TETE REGLABLE DE FA ON INDIVIDUELLE POUR SIEGES A DOSSIER

(30) Priorität: 13.03.1995 DE 29504287 U
(43) Veröffentlichungstag der Anmeldung: 07.01.1998
(73) Patentinhaber: Bonke, Christoph, Dr., 83126 Flintsbach (DE)
(72) Erfinder: Bonke, Christoph, Dr., 83126 Flintsbach (DE)
(86) Internationale Anmeldenummer: DE9600367
(87) Internationale Veröffentlichungsnummer: WO9628318

(56) Entgegenhaltungen:
- EP-A- 0 113 645
- DE-A- 3 042 802
- FR-A- 2 395 729
- GB-A- 2 246 292
- US-A- 4 206 945
- US-A- 4 285 081
- US-A- 4 720 146

## Beschreibung

Die vorliegende Erfindung betrifft eine individuell anpaßbare Kopfstütze für Sitze mit Rückenlehne mit den im Oberbegriff des Anspruchs 1 angegebenen Merkmalen.

Aus dem Stand der Technik ist eine Kopfstütze für einen Sitz in einem Kraftfahrzeug bekannt, die einen im wesentlichen zylindrischen Stützkörper umfaßt. Die Längsachse des Stützkörpers ist horizontal ausgerichtet und verläuft parallel zur oberen Kante der Rückenlehne.
Der Stützkörper wird gegenüber der Rückenlehne mit Hilfe von einem oder zwei senkrecht aus der Oberkante der Rückenlehne herausragenden Führungsstäben, die an der Unterseite des Stützkörpers eingreifen, in Position gehalten. Die Verankerung der oberen Enden der Führungsstäbe in dem zylindrischen Stützkörper ist so ausgebildet, daß eine Neigung des Stützkörpers in oder entgegengesetzt zur Fahrtrichtung möglich ist. Die Führungsstäbe können in der Rückenlehne versenkt oder aus dieser teilweise herausgezogen werden, wodurch sich eine Höhenverstellbarkeit des Stützkörpers ergibt.

Eine derartige Kopfstütze weist zahlreiche Nachteile auf.

Besonders nachteilig ist, daß die Nacken-Kopf-Region in orthopädischer Hinsicht vernachlässigt wird.
Wird das Fahrzeug beispielsweise durch ein frontales Hindernis abrupt zum Stillstand gebracht, kommt es zu einer peitschenschlagartigen Schwingung des Kopfes beziehungsweise des Oberkörpers in Längsrichtung des Fahrzeugs. Am Ende der rückwärts gerichteten Peitschenschlagbewegung prallt der Kopf auf den Stützkörper.
Aufgrund einer sehr kleinen Aufprallfläche wirken hierbei einerseits sehr große G-Kräfte auf das Gehirn ein, die dort Blutungen hervorrufen können. Andererseits wird häufig beobachtet, daß der Fahrer während der vorwärts gerichteten Peitschenschlagbewegung zumindest etwas aus dem Sitz gehoben wird. Dies hat für die rückwärts gerichtete Peitschenschlagbewegung zur Folge, daß der zylindrische Stützkörper nicht primär am Kopf, sondern zu tief am Übergangsbereich vom Kopf zum Nacken einwirkt. Dadurch wird eine Überdehnung des Nackens nach hinten bewirkt. Die nachfolgend auftretenden Symptome werden als Halswirbelsäulen-Schleudertrauma bezeichnet.
Die Verwendung einer derartigen bekannten Kopfstütze führt selbst bei einem Auffahrunfall, bei dem sich ein Aufprall von hinten auf ein stehendes Fahrzeug ereignet, zum Auftreten eines HWS-Schleudertraumas.
Wird bei zur Seite gedrehtem Kopf von hinten auf das Fahrzeug aufgefahren, so kommt es zusätzlich zu einer ausgeprägten Torsionsverbiegung der Halswirbelsäule. Irreparable Beschädigungen der Halswirbelsäule sind die regelmäßige Folge.
Wird das Fahrzeug seitlich, zum Beispiel in einem 90°-Winkel, angefahren, wird der Kopf zu einem Spielball der einwirkenden Kräfte.

Da derartige Verletzungen in der Regel mit einem hohen Behandlungsaufwand und einem mindestens 2- bis 3-wöchigen Arbeitsausfall verbunden sind, stellen sie eine erhebliche volkswirtschaftliche Belastung dar.

Schläft der Beifahrer, so pendelt dessen Kopf in Abhängigkeit von Erschütterungen des Fahrzeugs und von Fliehkräften unkontrolliert herum. Hierdurch werden zumindest Verspannungen der Nackenmuskulatur hervorgerufen, die häufig in Kopfschmerzen übergehen und dadurch zu einer vorzeitigen Ermüdung sowie einer verminderten Konzentrationsfähigkeit führen.

Befindet sich der zylindrische Stützkörper in seiner höchsten Position, wie dies bei einem Fahrer mit überdurchschnittlicher Körpergröße erforderlich ist, kommt es zu einer großflächigen Spaltbildung zwischen der Oberkante der Rückenlehne und der Unterseite des Stützkörpers. Mit dieser Spaltbildung gehen regelmäßig durch die zirkulierende Luft im Wageninneren hervorgerufene Zugprobleme einher. Sie konkretisieren sich häufig in Verspannungen der Nacken- und/oder Schultermuskulatur sowie in Muskelschmerzen.

Bei einem Überschlag des Fahrzeugs kommt trotz der meist verwendeten Anschnallgurte der Kopf des Fahrers mit der Innenseite beziehungsweise mit Streben des Fahrzeugdaches in Kontakt. Aufgrund der außerordentlich hohen Kräfte, die in diesem Fall auf den Schädel einwirken und die besonders empfindliche Halswirbelsäule stauchen, treten schwerwiegende Verletzungen auf.

Ein weiterer Nachteil der bekannten Kopfstützen liegt darin, daß im oberen Schulterbereich und im Nackenbereich während längerer Fahrten unabhängig von Zugproblemen und unbeabsichtigt einwirkenden Beschleunigungskräften mangels Bequemlichkeit Verspannungen der Muskulatur auftreten, die zu vorzeitiger Ermüdung, Einschränkung der Konzentrationsfähigkeit oder gar Kopfschmerzen und Migraine cervicale führen können.

In der gattungsbildenden GB-A-2 246 292 wird ein Kissen zur Kopfabstützung beschrieben, welches ein rückwärtiges, über die Rückenlehne gezogenes Tuch umfaßt, auf dessen Frontseite ein U-förmiges Element zur Abstützung des Hinterkopfes angebracht ist.

Bei einer derartigen Kopfstütze kann insbesondere während einer schräggerichteten Rebound-Bewegung des Oberkörpers ein Durchschwingen der Halswirbelsäule zur Seite hin erfolgen. Dieses seitliche Durchschwingen der Halswirbelsäule führt sehr häufig zu dem auch unter volkswirtschaftlichen Gesichtspunkten gefürchteten Halswirbelsäulen-Schleudertrauma (HWS-Syndrom).

Die DE-A1-3042802 offenbart eine Hinterkopf-Stütze mit einer horizontal verstellbaren, obenliegenden Kopfauflagefläche. Die verstellbare Kopfauflagefläche steht über flexible Rohre oder einen Gelenkmechanismus mit dem Rahmen des Sitzes in Verbindung. Bei größeren Kräften, wie sie beispielsweise bei einem unfallbedingten Kopfaufprall eintreten, wird die verstellbare Kopfauflagefläche in ihre hintere Lage geschoben. Es erfolgt dann eine direkte Krafteinleitung in den Rahmen.

Eine derartige Kopfstütze wirkt einem Durchschwingen der Halslordose bei einem unfallbedingten Aufprall beziehungsweise einer Rebound-Bewegung nicht entgegen.

Die EP 0113645 beschreibt eine Kopfstütze mit einem Bügel, dessen Form einem auf dem Kopfe stehenden Buchstaben U entspricht. In dem Raum zwischen den Schenkeln des u-förmigen Bügels ist ein Kissen vertikal schwenkbar angebracht. Wird die Kopfstütze hochgefahren, hängt das Kissen steil nach unten und ruht auf den stabförmigen, vertikalen Halterungen der Kopfstütze. Wird die Kopfstütze dagegen nach unten gefahren, ruht das schwenkbare Kissen flach auf der Oberkankte der Rückenlehne.
Das schwenkbare Kissen dieser Kopfstüze weist eine flache, plane Oberfläche auf und wirkt daher einem seitlichen Durchschwingen der Halslordose bei einer aufprallbedingten Rebound-Bewegung des Oberkörpers nicht entgegen.

Aufgabe der vorliegenden Erfindung ist daher die Bereitstellung einer Kopfstütze, die selbst bei schräg auf ein Fahrzeug einwirkenden Kräften der Entstehung eines Halswirbelsäulen-Schleudertraumas effektiv entgegenwirkt, die bei einem Frontalaufprall eines Fahrzeugs sowie bei einem Auffahrunfall ein Halswirbelsäulen-Schleudertrauma verhindert, die bei einem Frontalaufprall oder einem Auffahrunfall mit zur Seite gedrehtem Kopf einer Torsionsverdrehung der Halswirbelsäule entgegenwirkt, die bei einem Seitenaufprall ein Hin- und Herschleudern des Kopfes und der Halswirbelsäule ausschließt, die bei einem Aufprall des Kopfes auf selbiger die Gefahr einer durch zu hohe G-Kräfte bedingten Gehirnblutung verringert, die dem unbeabsichtigten Herumpendeln des Beifahrer-Kopfes während des Schlafens abhilft, die keine durch die Zirkulation der Luft bedingten Zugprobleme kennt, die einen effektiven Schutz des Kopfes und des Nackens im Falle eines Überschlags des Fahrzeugs bietet, die durch die Vermeidung der genannten Verletzungen zu erheblichen volkswirtschaftlichen Einsparungen führt, die eine Steigerung der Bequemlichkeit bewirkt, Verspannungen im Nacken- und Schulterbereich vermeidet und dadurch ein ermüdungsfreies und konzentriertes Fahren erlaubt und die kostengünstig herzustellen ist.

Erfindungsgemäß wird diese Aufgabe bei einer gattungsgemäßen Kopfstütze durch die im kennzeichnenden Teil des Anspruches 1 angegebenen Merkmale gelöst.

Besonders bevorzugte Ausführungsformen sind Gegenstand der Unteransprüche.

Eine erfindungsgemäß ausgestaltete Kopfstütze weist insbesondere den Vorteil auf, daß sie den Kopf und den Nackenbereich seitlich sowie nach hinten abstützt. Die Position und gegebenenfalls die Form der einzelnen Stützelemente können den anatomischen Gegebenheiten des Sitzenden, insbesondere der Form des Schädels und der Halswirbelsäule, individuell und nötigenfalls während der Fahrt angepaßt werden.
Dies führt zu einer Steigerung der Bequemlichkeit. Verspannungen der Nacken- und Schultermuskulatur werden vermieden. Insbesondere bei seitlich einwirkenden Beschleunigungskräften macht sich die seitliche Stabilisierung des Kopfes und des Halswirbelsäulenbereichs durch aktivierbare Seitenstützen positiv bemerkbar. Schleudertraumen wird durch die gegebenenfalls bis zu den Schultern reichenden seitlichen Stützelemente und die zumindest im Hinterkopfbereich in etwa halkugelförmige Formgebung der Kopfstütze beziehungsweise durch einen oberhalb des Kopfes vorstülpbaren Vorsprung (Luftsack) entgegengewirkt. Zugprobleme werden durch eine aktivierbare Halslordosestütze vermieden. Wird der obere, vordere Teil der Kopfstütze so ausgebildet, daß er sich nach vorne erstrecken und dabei den Kopf des Fahrers dachförmig überragen kann, so stellt dies außerdem einen effektiven Schutz des Kopfes bei einem Überschlag des Fahrzeugs dar.

Besonders bevorzugte Ausführungsbeispiele werden anhand der Abbildungen näher beschrieben.

Es zeigen :
Abbildung 1 eine schematische, perspektivische Ansicht einer erfindungsgemäßen Kopfstütze, deren oberer Stützkörper von der Oberkante der Rückenlehne beabstandet ist,
Abbildung 2 eine Frontansicht einer erfindungsgemäßen Kopfstütze, deren oberer Stützkörper mit der Oberkante der Rückenlehne in Kontakt steht,
Abbildung 3 einen Querschnitt einer erfindungsgemäßen Kopfstütze entlang der Linie A-A in Abbildung 2,
Abbildung 4 einen Querschnitt einer anderen Ausführungsform der erfindungsgemäßen Kopfstütze entlang der Linie A-A in Abbildung 2,
Abbildung 5 einen Querschnitt entlang der Linie A-A in Abbildung 2 einer weiteren Ausführungsform einer erfindungsgemäßen Kopfstütze,
Abbildung 6 einen schematischen Querschnitt entlang der vertikalen Mittellinie in Abbildung 2 einer erfindungsgemäßen Kopfstütze,
Abbildung 7 einen Querschnitt entlang der vertikalen Mittellinie in Abbildung (2) einer erfindungsgemäßen Kopfstütze mit einer einstückigen Kombination eines oberen und eines unteren Stützkörpers,
Abbildung 8 einen Querschnitt entlang der vertikalen Mit-tellinie in Abbildung (2) einer erfindungsgemäßen Kopfstütze mit einer nach vorne schwenkbaren, einstückigen Kombination eines oberen und unteren Stützkörpers,
Abbildung 9 eine Draufsicht auf eine erfindungsgemäße Kopfstütze mit oberen und unteren Seitenführungen und einem unteren Stützkörper,
Abbildung 10 einen Querschnitt entlang der vertikalen Mittellinie einer erfindungsgemäßen Kopfstütze mit einem expandierten Luftsack,
Abbildung 11 eine schematische Darstellung einer Seitenführung mit einer mit Feststoffkügelchen gefüllten frontseitigen Kammer sowie ein Blockschaltbild der Versorgung und Ansteuerung.

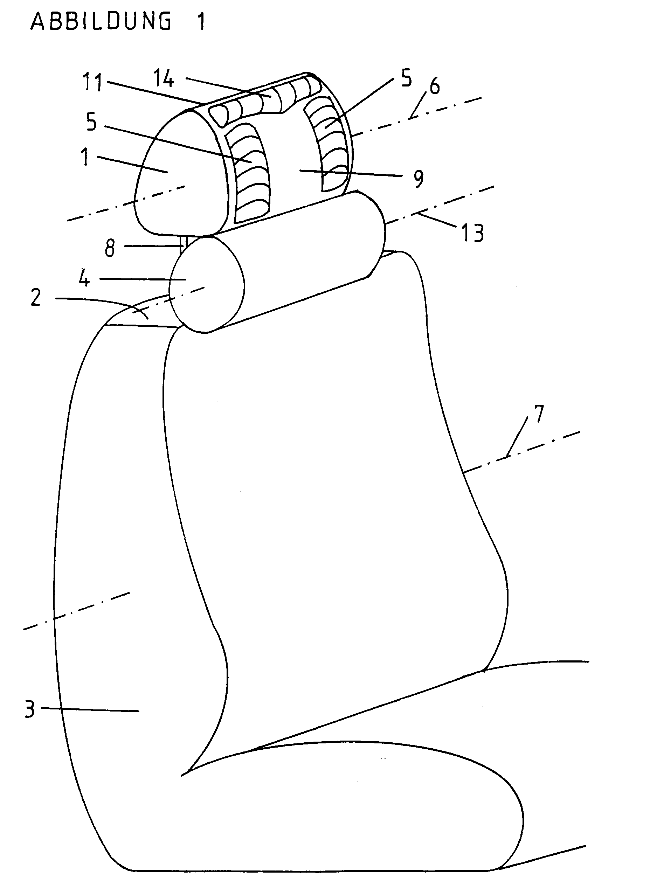

Abbildung 1 stellt eine schematische, perspektivische Ansicht einer erfindungsgemäßen Kopfstütze dar, die unter dem Aspekt einer besonders einfachen und kostengünstigen Herstellung sowie einer problemlosen Nachrüstbarkeit ausgestaltet ist.
Diese low-cost-Ausführungsform umfaßt zumindest einen oberen Stützkörper (1) zur Abstützung des Kopfes nach hinten, zwei Seitenführungen (5), die frontseitig auf dem oberen Stützkörper (1) vorgesehen sind und zur seitlichen Abstützung des Kopfes dienen, sowie einen unteren Stützkörper (4) zur Abstützung des Halslordosebereichs.

Der obere Stützkörper (1) befindet sich in Verlängerung der Rückenlehne (3) oberhalb der Oberkante (2) der Rückenlehne (3) und ist im wesentlichen zylindrisch. Er weist einen vorzugsweise runden, ovalen, halbkreisförmigen oder rechteckigen Querschnitt auf. Gegebenenfalls kann die Querschnittsfläche im wesentlichen der Fläche eines Dreiecks entsprechen.
Die Längsachse (6) des zylindrischen oberen Stützkörpers (1) ist horizontal ausgerichtet und verläuft parallel zur Längsachse (7) der Rückenlehne (3).
Die Unterseite des oberen Stützkörpers (1) kann mit der Oberkante (2) der Rückenlehne (3) in Kontakt stehen. Dies ist insbesondere dann der Fall, wenn der obere Stützkörper (1) in den oberen Teil der Rückenlehne (3) integriert ist. In der Regel ist jedoch der obere Stützkörper (1) von der Oberkante (2) der Rückenlehne (3) höhenverstellbar beabstandet. In diesem Fall steht der obere Stützkörper (1) über mindestens ein Halteelement (8) mit der Rückenlehne (3) in Verbindung. Ein derartiges Halteelement (8) kann stab- oder rohrförmig sein oder einen im wesentlichen rechteckigen Querschnitt aufweisen. Es ragt im wesentlichen senkrecht nach oben aus der Oberkante (2) der Rückenlehne und tritt an der Unterseite des oberen Stützkörpers (1) in diesen ein. Das Halteelement (8) kann in der Rückenlehne (3) und/oder in dem oberen Stützkörper (1) vertikal verschiebbar gelagert sein. In besonders bevorzugten Ausführungsformen steht das obere Ende des Halteelements (8) über eine Schwenkvorrichtung mit dem oberen Stützkörper (1) in Verbindung, die eine Neigung des oberen Stützkörpers (1) im rechten Winkel zur Längsachse (7) der Rückenlehne (3) erlaubt.
Vorzugsweise wird der obere Stützkörper (1) mit Hilfe eines in die Rückenlehne und/oder in ihn selbst integrierten manuellen, elektrischen, hydraulischen oder pneumatischen Höhenverstellungsmechanismus auf eine Höhe eingestellt, bei der der Berührungspunkt zwischen dem oberen Stützkörper (1) und dem Hinterkopf deutlich unterhalb des oberen Endes (11) des oberen Stützkörpers (1), etwa im Bereich der horizontalen Mittellinie (12), liegt.

An der Frontseite (9) des oberen Stützkörpers (1) sind mindestens zwei Mittel (5) zur seitlichen Abstützung des Kopfes vorgesehen. In der Regel sind ihre Formen und Anbringungsorte bezogen auf die vertikale Mittellinie (10) der Frontfläche (9) axialsymmetrisch. Bei frontaler Betrachtung können sie beispielsweise eine runde, ovale, längliche, rechteckige oder bananenförmige Grundfläche aufweisen. Ihre Verteilung auf der Frontfläche (9) wird in Abhängigkeit von der jeweiligen Grundfläche und Ausdehnung so gewählt, daß eine maximale seitliche Abstützung des Kopfes bei einer minimalen Beeinträchtigung des Sitzkomforts erzielt wird.
Horizontal betrachtet sind die Seitenführungen (5) vorzugsweise zumindest etwas voneinander beabstandet, so daß zumindest ein Teil des Hinterkopfes und/oder des Schläfenbereichs zwischen ihnen zu liegen kommen kann. Von der vertikalen Mittellinie (10) sind sie, wie bereits ausgeführt, jeweils gleich weit, das heißt symmetrisch, beabstandet. Sind beispielsweise nur zwei Seitenführungen (5) auf der Frontfläche (9) des oberen Stützkörpers (1) vorgesehen, so liegen bei frontaler Betrachtung die Flächenschwerpunkte ihrer Grundflächen in etwa auf der Höhe der horizontalen Mittellinie (12) der Frontseite (9) des oberen Stützkörpers (1).
Kommen mehrere Seitenführungen (5) zum Einsatz, beispielsweise vier mit jeweils runder Grundfläche, so befindet sich vorzugsweise zu beiden Seiten der vertikalen Mittellinie (11) und der horizontalen Mittellinie (12) die gleiche Anzahl (beispielsweise zwei) von Seitenführungen (5). Ein derartiges Anordnungsmuster ist insbesondere dann bevorzugt, wenn der Berührungspunkt zwischen dem oberen Stützkörper (1) und dem hintersten Teil des Hinterkopfes dem Schnittpunkt der vertikalen Mittellinie (10) und der horizontalen Mittellinie (12) entspricht.

In einer besonders kostengünstigen Ausführungsform kann es sich bei den Seitenführungen (5) um massive, plastische Elemente mit den bereits genannten Grundformen handeln, die beispielsweise aus Schaumstoff hergestellt sind. Sie sind zumindest etwas elastisch und können durch einen entsprechenden Zuschnitt der jeweiligen Kopfform angepaßt werden.

In etwas aufwendiger gestalteten Ausführungsformen werden die Seitenführungen (5) durch Hohlkörper, beispielsweise mit den oben angegebenen Grundformen, gebildet. Durch das Einfüllen eines gasförmigen, flüssigen oder festen Mediums oder von Mischungen hiervon in den Hohlraum kann das Ausmaß der Erhebung und der Breite der jeweiligen Seitenführung (5) exakt eingestellt werden. Dies führt zu dem Vorteil, daß die Seitenführungen (5) selbst während der Fahrt an unterschiedlichste Kopfformen individuell angepaßt und entsprechend dem Wunsch des Sitzenden versenkt oder herausgefahren werden können.

Derartige Seitenführungen (5) umfassen beispielsweise eine zumindest etwas starre Unterlage, die eine der genannten Grundformen aufweist. Auf der starren Unterlage liegt lose eine im Vergleich zu dieser sehr elastische Folie auf, deren äußere Abmessungen in etwa den Abmessungen der starren Unterlage entsprechen und deren Ränder mit den Rändern der Unterlage - gegebenenfalls gasdicht - verbunden sind. Wird über einen Stutzen, der gegebenenfalls mit einem Ventil ausgerüstet ist, in den Zwischenraum zwischen der starren Unterlage und der hochelastischen Folie ein Medium eingeführt, so wölbt sich die hochelastische Folie nach oben und bildet dadurch die Seitenführung (5).
Nötigenfalls können an den Innenwänden verankerte, gegebenenfalls elastische Fangbänder oder Wandverstärkungen vorgesehen werden, um ein Ausbeulen an unbeabsichtigten Stellen zu vermeiden und um die Form der expandierten Seitenführung (5) exakt zu definieren.
In einer besonders bevorzugten Ausführungsform weist der obere Stützkörper (4) eine zentrale, frontseitige Mulde (32) auf, die zur Aufnahme und Abstützung des Hinterkopfes dient.

Zur Befüllung des Zwischenraumes mit einem Medium kann grundsätzlich jede Art von Pumpe verwendet werden. Beispiele für verwendbare Pumpen sind Laufradpumpen vom Radial-, Diagonal-, oder Axialtyp, Dosierpumpen, Hubkolbenpumpen, Stufenkolbenpumpen, Membranpumpen, Treibmittelpumpen, Druckgaspumpen, Rotationspumpen (Umlaufpumpen) wie Kreiselpumpen oder Zahnradpumpen, Kreiskolbenpumpen, Preßpumpen, Schlauchpumpen, Spindelpumpen oder Schneckenpumpen, Vakuumpumpen wie Vakuumkolbenpumpen, Naßläufervakuumpumpen, Roots-Vakuumpumpen, Trockenläufervakuumpumpen, Wasserringvakuumpumpen und Wirbelpumpen. Bevorzugt sind solche Pumpen (70,71) die auch einen leichten Unterdruck erzeugen können. Elektrisch, pneumatisch oder hydraulisch betriebene Pumpen sind bevorzugt, da sie eine bequeme Veränderung der Raumform der jeweiligen Kammer sogar während der Fahrt erlauben und mühelos in der Rückenlehne beziehungsweise zentral innerhalb der Kopfstütze unterzubringen sind. Unter dem Aspekt günstigster Herstellungskosten ist insbesondere eine handbetriebene ballonartige Pumpe geeignet, die unter anderem bei Blutdruckmeßgeräten zur Anwendung kommt. Über ein Schraubventil an der ballonartigen Pumpe kann hier auf einfache Weise der Druck innerhalb der Seitenführung (5) verringert werden. Selbstverständlich können auch elektrisch betriebene Pumpen, Druckgasbehälter oder Gasgeneratoren zur Befüllung der Seitenführungen (5) eingesetzt werden.

Als besonders vorteilhaft hat sich erwiesen, zur vertikalen Mittellinie (10) symmetrische Seitenführungen (5) nach dem Prinzip kommunizierender Röhren miteinander zu verbinden und über dieselbe Pumpe, denselben Druckgasbehälter oder denselben Gasgenerator zu befüllen.

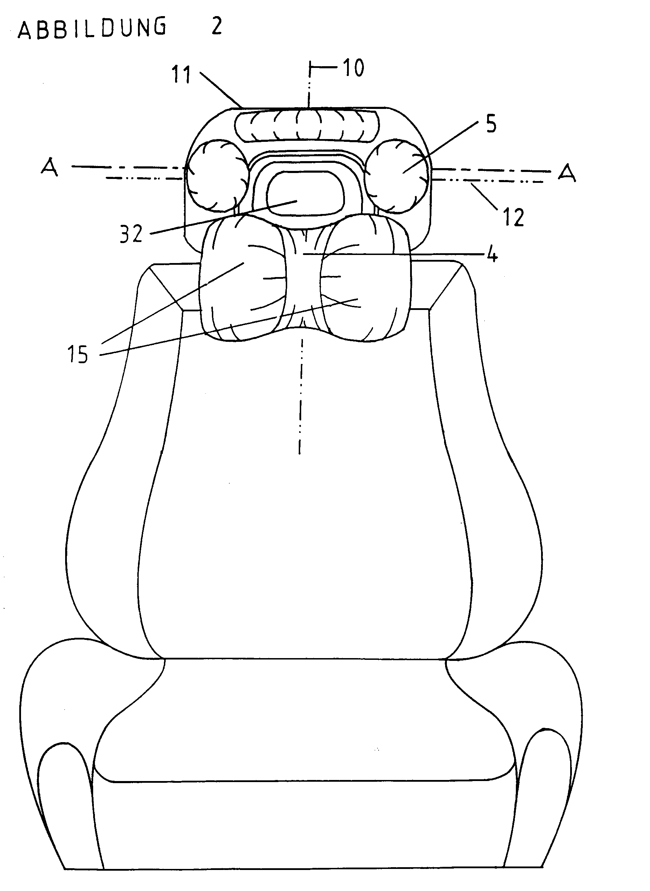

In Abbildung 2 ist eine besonders bevorzugte Ausführungsform der erfindungsgemäßen Kopfstütze dargestellt, die auf der Frontseite (9) des oberen Stützkörpers (1) zusätzlich zu den Seitenführungen (5) zumindest einen permanenten oder vorstülpbaren Vorsprung (14) aufweist.
Er entspringt dem oberen Drittel des oberen Stützkörpers (1) in der Regel oberhalb der Seitenführungen (5) und besitzt bei frontaler Betrachtung vorzugsweise eine längliche, rechteckige Grundfläche. Die Längsachse dieser Grundfläche ist horizontal ausgerichtet und verläuft parallel zur Längsachse (6) des oberen Stützkörpers (1). Der Vorsprung (14) ist nach vorne in Fahrtrichtung gerichtet; gegebenenfalls weist sein frontseitiges Ende etwas nach oben und überragt in vollständig aktiviertem Zustand den Kopf des Sitzenden zumindest teilweise dachförmig.

Bei einem Überschlag des Fahrzeugs wird auf diese Weise vermieden, daß die Schädeldecke durch einen Kontakt mit dem Autodach oder einer Dachstrebe beschädigt wird.
Im Falle eines Frontalaufpralls kommt es zu einer peitschenschlagartigen Bewegung des Kopfes. Am Ende der rückwärts gerichteten peitschenschlagartigen Bewegung soll der Kopf durch den oberen Stützkörper (1) mit den Seitenführungen (5) abgefangen werden. Bei Kopfstützen des Standes der Technik wirkt die Oberkante des horizontalen Stützkörpers jedoch in der Regel zu tief im Bereich der Halslordose ein. Es kommt zu einer ausgeprägten Überdehnung der Halswirbelsäule nach hinten. Als Folge beobachtet man zumindest ein HWS-Schleudertrauma.
Der Vorsprung (14) verhindert dieses zu tief gerichtete Einwirken der Oberkante des oberen Stützkörpers (1) im Bereich der Halslordose, indem er den zu hoch zurückschwingenden Kopf bei entsprechend nach oben geneigter Ausgestaltung des Vorprungs (14) regelrecht einfängt und sanft in die richtige, tiefer gelegene Position zurückführt. Auf diese Weise können durch einen Frontal- oder Auffahrunfall bedingte Schleudertraumen einfach und sicher vermieden werden.
Der Vorsprung (14) kann einstückig mit dem oberen Stützkörper (1) hergestellt werden und permanent wulst- oder dachförmig nach vorne in Fahrtrichtung ragen.
Vorzugsweise ist der Vorsprung (14) jedoch so ausgebildet, daß er durch eine Befüllung mit einem flüssigen, gasförmigen oder festen Medium oder mit Mischungen hiervon in seine wulst- oder dachförmige Endform gebracht werden kann. Der Aufbau des Vorsprungs (24) kann in diesem Fall in Entsprechung zu dem bereits geschilderten Aufbau der Seitenführungen (5) gewählt werden. Die dort genannten Pumpen, Druckgasbehälter und/oder Gasgeneratoren können auch zur Befüllung des Vorsprungs (14) verwendet werden.

Wie aus den Abbildungen 1 und 2 deutlich hervorgeht, ist am unteren Ende der Frontseite (9) und/oder am frontseitigen Ende der Unterseite des oberen Stützkörpers (1) ein unterer Stützkörper (4) zur Abstützung der Halslordosewirbelsäule angebracht. Dieser ist im wesentlichen zylindrisch und weist beispielsweise eine runde, ovale, rechteckige oder halbkreisförmige Querschnittsfläche auf. Die Längsachse (13) des unteren Stützkörpers (4) ist horizontal ausgerichtet und verläuft parallel zu der Längsachse (6) des oberen Stützkörpers (1) und der Längsachse (7) der Rückenlehne (3).
Ist der obere Stützkörper (1) in einer hochgestellten Position arretiert, bildet sich ein Spalt zwischen der Oberkante (2) der Rückenlehne (3) und der Unterseite des oberen Stützkörpers (1). Wie aus Abbildung 1 hervorgeht, wird in diesem Fall der untere Stützkörper (4) so angebracht, daß er zumindest teilweise mit dem oberen Stützkörper (1) und der Oberkante (2) der Rückenlehne (3) abschließt, also den Spalt verdeckt und zugleich in die Krümmung der Halslordose abstützend einwirken kann.
Dies führt unter anderem zu dem bedeutenden Vorteil, daß durch die zirkulierende Luft des Wageninneren keine Zugprobleme im Nackenbereich hervorgerufen werden können. Verspannungen im Nacken- und/oder Schulterbereich, Kopfschmerzen und ein hierdurch bedingtes vorzeitiges Ermüden werden verhindert.

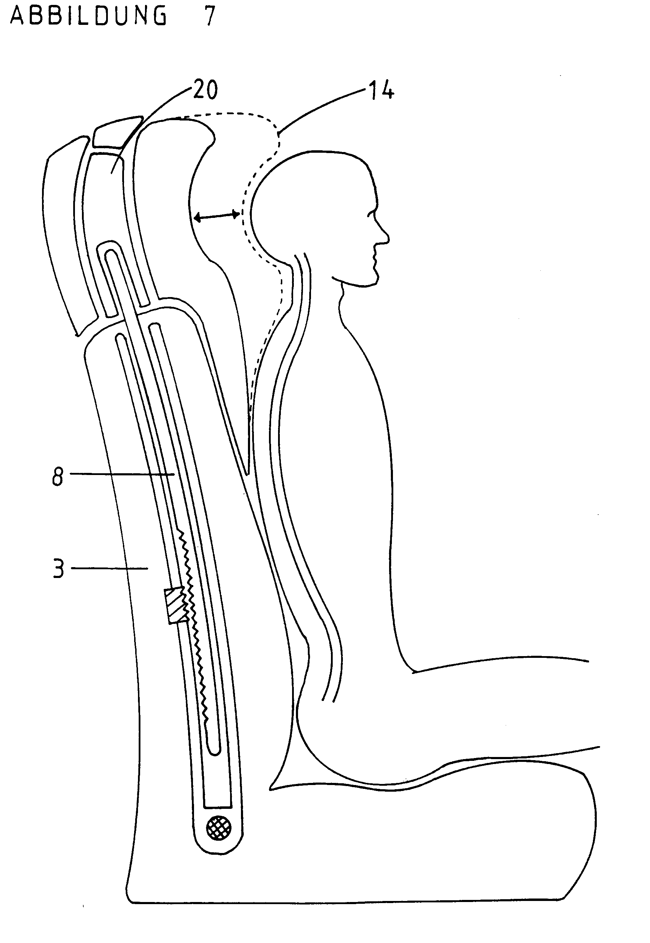

Falls die Unterseite des oberen Stützkörpers (1) nicht oder nur sehr wenig von der Oberkante (2) der Rückenlehne (3) nach oben beabstandet ist (siehe Abbildung 2), wird der untere Stützkörper (4) insbesondere so angeordnet, daß er in die Krümmung der Halslordose abstützend eingreifen kann. Zu diesem Zweck kann der untere Stützkörper (4) frontseitig zumindest teilweise den unteren Teil des oberen Stützkörpers (1) und/oder den oberen Teil der Rückenlehne (3) überragen (siehe Abbildung 6). Vorzugsweise ist bei seitlicher Betrachtung die Querschnittsfläche des unteren Stützkörpers (4) in diesem Fall im wesentlichen halbkreisförmig, wobei die gerade Seite mit dem oberen Stützkörper (1) und/oder der Rückenlehne (3) in Verbindung steht, während die gewölbte Seite nach vorne in Richtung der Halslordose zeigt.

Soll die erfindungsgemäße Kopfstütze besonders kostengünstig sein, so wird der untere Stützkörper (4) zum Beispiel aus einem massiven Körper aus einem zumindest etwas elastischen Material, beispielsweise aus Schaumstoff, hergestellt.
Vorzugsweise ist der untere Stützkörper (4) jedoch so ausgestaltet, daß seine Ausdehnung, insbesondere in die Richtung der Halslordose des Sitzenden, auch während der Fahrt individuell einstellbar ist. Zu diesem Zweck kann der untere Stützkörper (4) zum Beispiel in Form eines im wesentlichen zylindrischen Hohlkörpers vorliegen, dessen Rückseite verhältnismäßig starr ist und dessen Frontseite im Vergleich zur Rückseite elastisch ist. Wird in den Hohlraum ein flüssiges, gasförmiges oder festes Medium oder eine Mischung hiervon, eingebracht, so wölbt sich die elastische Frontseite nach vorne. Durch den Druck des Befüllungsmediums kann der untere Stützkörper (4) in jede beliebige Form gebracht und den anatomischen Gegebenheiten des Sitzenden exakt angepaßt werden.
Nötigenfalls können innerhalb des unteren Stützkörpers (4) an den Innenwänden angebrachte Fangbänder oder Wandverstärkungen vorgesehen werden, die ein unbeabsichtigtes Ausbeulen der elastischen frontseitigen Wandung verhindern und den befüllten unteren Stützkörper (4) in der gewünschten Form halten.

Zur Befüllung des unteren Stützkörpers (4) kann auf die gleichen Pumpen, Druckgasbehälter und/oder Gasgeneratoren wie im Falle der Seitenführungen (5) zurückgegriffen werden.

Wie bereits ausgeführt, dient der untere Stützkörper (4) gegebenenfalls zum Verschließen des Spalts zwischen der Rückenlehne (3) und dem hochgestellten oberen Stützkörper (1). Insbesondere kommt ihm jedoch die Aufgabe zu, die Halswirbelsäule abzustützen. Diese Abstützung der Halswirbelsäule hat den bedeutenden Vorteil zur Folge, daß bei einem peitschenschlagartigen Zurückschwingen des Oberkörpers nach einem Frontalaufprall des Kraftfahrzeuges die Halswirbelsäule nicht nach hinten durchschwingt und eine gefährliche Nickbewegung des Kopfes verursacht. Der untere Stützkörper (4) verstärkt darüberhinaus die Wirkung des wulst- oder dachförmigen Vorsprungs (14) und trägt somit erheblich zur Vermeidung von Schleudertraumen bei. Beim Zurückschwingen nach einem Frontalaufprall hat der Oberkörper das Bestreben, der Rückenlehne (3) entlang nach oben zu rutschen. Am Ende dieser Rutschbewegung greift die Oberkante des oberen Stützkörpers gegebenenfalls zu tief im Nackenbereich ein und verursacht eine Überdehnung der Halswirbelsäule nach hinten (Schleudertrauma). Durch das Einwirken des unteren Stützkörpers (4) in die Krümmung der Halslordose und/oder auf die Schulterpartie wird diese Rutschbewegung abgestoppt. Dieser Rutschbewegung wirkt auch der gegebenenfalls dachförmige Vorsprung (14) entgegen, indem er den Kopf sanft niederhält.
Ein weiterer Vorteil des unteren Stützkörpers (4) liegt darin, daß er zu einer erheblichen Steigerung der Bequemlichkeit sowohl in aufrechter Rückenlehnenposition als auch in der Liegeposition führt.

In einer besonders bevorzugten Ausführungsform weist der untere Stützkörper (4) bei einer Betrachtung von oben eine in etwa dem Buchstaben 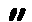 U" entsprechende Form auf. Die freien Schenkel des U's sind dabei im wesentlichen horizontal nach vorne gerichtet, während der gekrümmte Bereich des U's in die Richtung der Rückenlehne (3) zeigt.

Alternativ oder zusätzlich hierzu ist es möglich, auf einem geraden, bananen- oder U-förmigen unteren Stützkörper (4) in den seitlichen Bereichen der Frontfläche (9) permanent hervorragende oder durch eine Befüllung aktivierbare untere Seitenführungen (15) vorzusehen. Für diese unteren Seitenführungen (15) gelten die Ausführungen zu den oberen Seitenführungen (5) des oberen Stützkörpers (1) entsprechend.

Der Vorteil eines in etwa U-förmigen unteren Stützkörpers (4) oder eines im wesentlichen geraden unteren Stützkörpers (4) mit zusätzlichen unteren Seitenführungen (15) liegt darin, daß beim Einwirken von seitlichen Beschleunigungskräften auf den Sitz eine seitliche Fixierung der Halswirbelsäule gewährleistet wird. Dadurch wird die seitliche Fixierung des Kopfes durch die oberen Seitenführungen (5) des oberen Stützkörpers (1) unterstützt und ein erheblicher Beitrag zur Vermeidung von Torsionsschäden und Schleudertraumen geleistet.
Außerdem wird ein nicht exakt mittig zurückschwingender Oberkörper durch die gegebenenfalls zumindest etwas zur Seite aufgebogenen U-förmigen Schenkel des unteren Stützkörpers (4) und/oder die unteren Seitenführungen (15) zentriert und aufgerichtet, so daß der dachförmige Vorsprung (14), die oberen Seitenführungen (5) und der untere Stützkörper (4) jeweils ihre volle Wirkung entfalten können.

Die aktivierbaren Bestandteile der erfindungsgemäßen Kopfstütze ( obere Seitenführungen (5), oberer Vorsprung (14), unterer Stützkörper (4) und untere Seitenführungen (15) ) können mit jeweils unterschiedlichen Befüllungsmitteln verbunden sein. Beispielsweise kann jeder dieser Bestandteile über eine separate Schlauchleitung mit einer separaten ballonartigen Handpumpe in Verbindung stehen, wobei das Ensemble von Handpumpen in einer Pumpenkonsole mit entsprechender Kennzeichnung der einzelnen Pumpen zusammengefaßt sein kann. Für die Unterbringung der Pumpenkonsole ist beispielsweise der seitliche Bereich des Sitzes oder die Mittelkonsole eines Fahrzeuges geeignet. Eine Anbringung an dem freien Ende eines biegbaren Stabes, dessen anderes Ende im Bereich der Mittelkonsole oder des Armaturenbrettes verankert ist, ist ebenfalls denkbar.

Möglich ist ferner anstelle einer Vielzahl von Befüllungsmitteln (Pumpen, Druckgasbehälter, Gasgeneratoren) nur ein einziges Befüllungsmittel einzusetzen, das direkt oder über ein zum Beispiel drehbares Verteilventil und über daran angeschlossene Verteilungsleitungen mit jedem der aktivierbaren Bestandteile durchgängig in Verbindung gebracht werden kann. Die Verteilungsleitungen können in oder neben der Rückenlehne (3) geführt werden.

Eine direkte Verbindung zwischen einem Druckgasbehälter und/oder einem Gasgenerator und den genannten aktivierbaren Bestandteilen wird insbesondere dann gewählt, wenn die aktivierbaren Bestandteile auf das Signal eines Verzögerungs- und/oder Beschleunigungszünders beziehungsweise -melders nahezu gleichzeitig aktiviert werden sollen. Die Verbindungsleitungen sollten in diesem Falle möglichst kurz gewählt und mit einem großen Durchmesser ausgestattet werden, so daß für eine Unterbringung des Druckgasbehälters und/oder des Gasbehälters in erster Linie der Innenraum des oberen Stützkörpers (1), des unteren Stützkörpers (4) oder der Rückenlehne (3) in Frage kommt.

In einer besonders bevorzugten Ausführungsform sind nicht nur die oberen und unteren Seitenführungen (5, 15), der obere Vorsprung (14) und der untere Stützkörper (4) mittels eines mit einem Verzögerungszünder gekoppelten Druckgasbehälters oder Gasgenerators luftsackähnlich expandierbar. Vielmehr kann dort zusätzlich die gesamte Frontseite (9) des oberen Stützkörpers (1) und die dem Fond zugewandte Rückseite des oberen Stützkörpers (1) luftsackähnlich ausgestülpt werden, wobei die exakte Einhaltung einer bestimmten Kissenform durch die Anbringung von Fangleinen oder Fangbändern an der Innenseite der Wandungen, durch die Wahl unterschiedlicher Wandstärken oder durch die Anbringung von Wandverstärkungen erreicht wird.

Gerade unter dem Aspekt der Verwendung der erfindungsgemäßen Kopfstütze in Verbindung mit einem mit einem Verzögerungs- oder Beschleunigungszünder oder -melder gekoppelten Druckgasbehälter und/oder Gasgenerator hat es sich als besonders vorteilhaft erwiesen, den Vorsprung (14), die oberen und die unteren Seitenführungen (5, 15) und den unteren Stützkörper (4) nicht einzeln auszubilden, sondern in Form einer einstückigen Kombination. Hierbei kann beispielsweise aus Kostengründen auf die Integration der einen oder anderen Komponente selbstverständlich verzichtet werden.

Ein besonderer Vorteil der erfindungsgemäßen Kopfstütze liegt darin, daß sie in einer sehr einfachen Ausführungsform leicht nachrüstbar ist.
So können beispielsweise in einen kapuzenartigen Überzug, der der Form des serienmäßigen Sitzes und der gegebenenfalls serienmäßig vorhandenen Kopfstütze angepaßt ist, an den beschriebenen Positionen massiv oder expandierbar ein Vorsprung (14), obere und gegebenenfalls untere Seitenführungen (5, 15) sowie ein unterer Stützkörper (4) zum Beispiel in entsprechend abgenähte Taschen eingearbeitet werden.

Alternativ hierzu können die aktivierbaren Bestandteile auf ihrer Rückseite mit einem Mittel versehen werden, das auf der Oberfläche des oberen Stützkörpers (1) und/oder der Rückenlehne (3) haftet. Durch einfaches Andrücken können so die aktivierbaren Bestandteile nachgerüstet werden. Insbesondere klettverschlußartige Mittel sind für diese Art der Montage geeignet.
Für die Befestigung des unteren Stützkörpers (4) an der Unter- oder Frontseite des oberen Stützkörpers (1) hat sich außerdem die Verwendung einer Druckknopf-Leiste, einer Klettverschluß-Leiste oder eines Reißverschlusses bewährt.

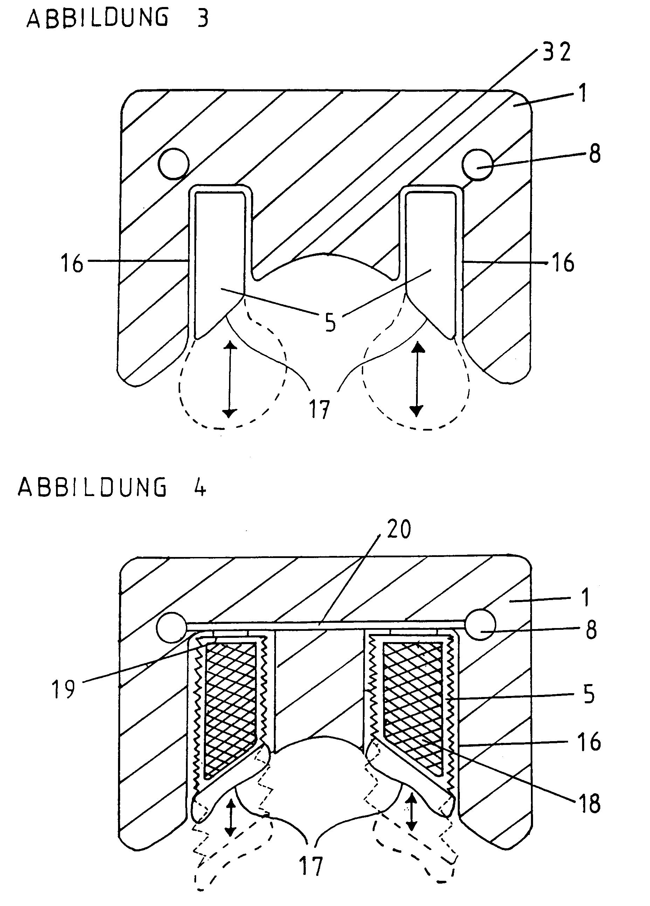

Selbstverständlich ist es möglich, mit einem geeigneten Bohrer, Fräser oder Thermoschneider Aussparungen (16) in dem oberen und/oder unteren Stützkörper (1,4) anzubringen, in die die oberen und/oder unteren Seitenführungen (5,15) und gegebenenfalls der obere Vorsprung (14) eingesetzt werden (vergleiche die Abbildungen 3, 4 und 5).

Die Abbildungen 3, 4 und 5 stellen Querschnitte entlang der Linie A-A in Abbildung 2 von verschiedenen Ausführungsformen dar.

In Abbildung 3 sind in dem oberen Stützkörper (1) zwei auf gleicher Höhe, jedoch horizontal voneinander beabstandete Aussparungen (16) zur Aufnahme von zwei oberen Seitenführungen (5) ausgebildet. Die Seitenführungen (5) sind hier vorzugsweise aus einem hochelastischen, gasdichten Material wie Gummi, Kautschuk, Latex oder Neopren hergestellt. In der Ausgangsstellung weisen sie eine der durchgezogenen Linie entsprechende Form auf, die den im wesentlichen rechteckigen Aussparungen (16) und der frontseitigen Abschrägung der Kopfmulde (32) angepaßt ist. Über eine oder mehrere, hier und in den nachfolgenden Abbildungen nicht dargestellte, Anschlußleitungen können die Seitenführungen (5) mit einem beliebigen Medium befüllt werden. Dank der hochelastischen Ausgestaltung zumindest der vorzugsweise abgeschrägten Frontfläche (17) kann sich diese dann ballonartig entsprechend der gestrichelten Linie aufweiten.

In Abbildung 4 sind die Frontflächen (17) der Seitenführungen (5) großflächiger ausgebildet und der Rundung des Schädels angepaßt. Hierdurch wird insbesondere die Bequemlichkeit gesteigert. Die seitlichen Bereiche können eine faltenbalgähnliche Struktur aufweisen. Um eine bestimmte Ausgangsform zu erhalten, kann ein entsprechend geformter Block (18) aus einem elastischen Material, beispielsweise aus Schaumstoff, im Inneren der Seitenführung (5) vorgesehen werden. Gegebenenfalls können Versteifungen oder zum Beispiel teleskopartige Führungselemente zur Verhinderung eines unbeabsichtigten Kippens der expandierten Seitenführung (5) zur Seite in deren Wänden integriert oder in deren Innenraum vorgesehen werden.
Die Rückseite (19) der Seitenführung (5) kann zur Erhöhung der Kippsicherheit der expandierten Seitenführung (5) mit einer Trägerplatte (20) in Verbindung stehen. Eine kraftschlüssige und gegen ein Kippen gesicherte Verbindung kann beispielsweise durch ein Verkleben, durch das Vorsehen von Klettverschlüssen oder durch das Ineinandergreifen von entsprechend gestalteten Vorsprüngen einerseits und hierzu korrespondierenden Aussparungen andererseits, zum Beispiel in Form von Schnappverbindungen oder Druckknöpfen, herbeigeführt werden. Diese Trägerplatte kann, wie in Abbildung 4 dargestellt, unmittelbar an dem oder den senkrechten Halteelementen (8) angebracht sein.

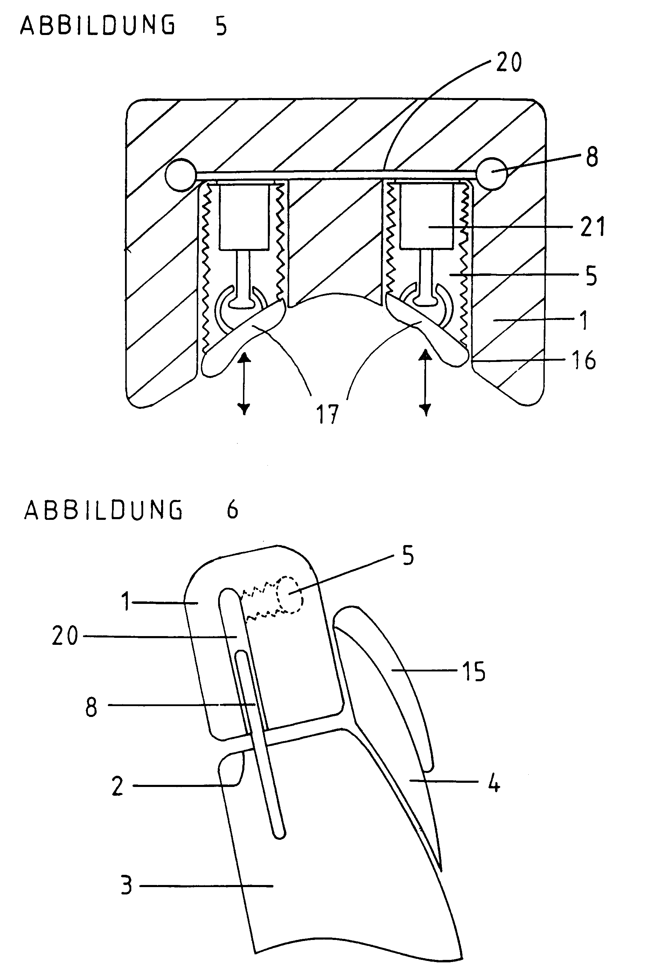

Die Seitenführungen (5) der Abbildung 5 werden durch hydraulisch, pneumatisch oder elektrisch betriebene Hubzylinder (21) oder durch entsprechende Stellmotoren bewegt. Die Verbindungen zwischen den großflächigen, der Kopfform angepaßten Frontflächen (17) und den frontseitigen Enden der Hubzylinder (21) sind, wie dargestellt, vorzugsweise kugelgelenkförmig ausgebildet. Die Verwendung von an der Trägerplatte (20) verankerten Hubzylindern (21) eröffnet die Möglichkeit einer besonders exakten Anpassung der Seitenführungen (5) an die Kopfform bei einer ausgesprochen hohen Kippstabilität im expandierten Zustand.

Es wird nochmals betont, daß sämtliche Ausführungen zu den oberen Seitenführungen (5) auch für die unteren Seitenführungen (15) entsprechend gelten.

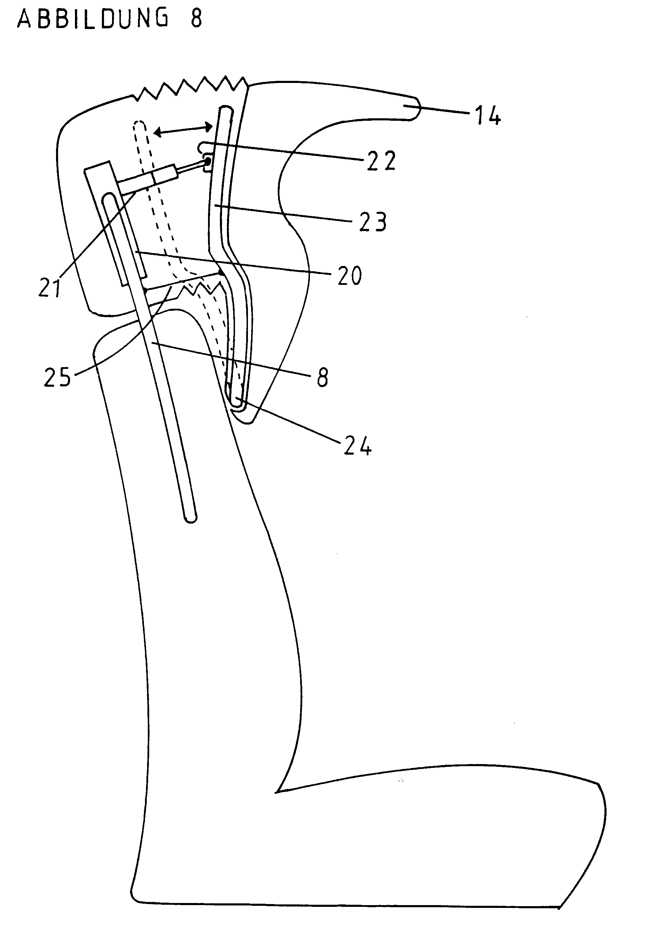

Abbildung 7 stellt einen Querschnitt entlang der vertikalen Mittellinie (10) in Abbildung 2 einer besonders bevorzugten Ausführungsform der erfindungsgemäßen Kopfstütze dar, bei der zumindest der obere Stützkörper (1) und der untere Stützkörper (4) in Form einer einstückigen Kombination ausgebildet sind.
Die Frontkontur dieser Kombination ist bei seitlicher Betrachtung im wesentlichen S-förmig und wird im nicht-expandierten Ausgangszustand durch die durchgezogene Linie und im expandierten beziehungsweise teilweise expandierten Zustand durch die gestrichelte Linie wiedergegeben.

Aus dieser Abbildung geht ferner die bevorzugte Form der hinteren Trägerplatte (20) besonders deutlich hervor. Beiseitlicher Betrachtung verläuft der untere Teil der Trägerplatte (20) zunächst entsprechend der Formgebung der Halteelemente (8) gerade nach oben. Etwa ab der Mitte der Trägerplatte (20) kann diese eine leichte Krümmung nach vorne in Fahrtrichtung erfahren. Diese Krümmung führt zu dem Vorteil, daß bei der rückwärts gerichteten peitschenschlagartigen Bewegung des Oberkörpers nach einem Frontalaufprall oder einem Auffahrunfall dieser nicht ohne weiteres der meist schräg nach hinten geneigten Rückenlehne entlangrutscht und daß hierdurch einer Überdehnung des Nackens durch eine zu tief einwirkende Kopfstütze entgegengewirkt wird. Diese Krümmung hat außerdem zur Folge, daß der frontseitige Bereich der erfindungsgemäßen Kopfstütze bereits in der nicht expandierten Ausgangsstellung in etwa der Form eines Hinterkopfes angepaßt ist und daß aus diesem Grunde die Materialstärke des frontseitigen Bereichs insbesondere an den oberen und unteren Enden im Vergleich zu einer durchgängig geraden Trägerplatte (20) dünner gewählt werden kann.
Selbstverständlich ist es jedoch auch möglich, auf diese Krümmung zu verzichten und die Trägerplatte (20) bei seitlicher Betrachtung durchgängig gerade auszugestalten.

Abbildung 8 zeigt eine Möglichkeit zur technischen Realisierung der in Abbildung 7 dargestellten, nach vorne gerichteten Bewegung der aus einem oberen und einem unteren Stützkörper (1,4) gebildeten Kombinaton.
Beispielsweise kann auf einer sich zwischen den senkrechten Halteelementen (8) erstreckenden hinteren Trägerplatte (20) ein hydraulisch, pneumatisch oder elektrisch aktivierbarer Hubzylinder (21) starr oder vertikal schwenkbar angebracht sein. Das frontseitige Ende des Hubzylinders ist über ein Kugelgelenk (22) mit einer vorderen Trägerplatte (23) verbunden.
Die vordere Trägerplatte (23) weist bei seitlicher Betrachtung einen oberen geraden Abschnitt auf, der in der nicht entfalteten Ausgangsstellung im wesentlichen senkrecht verläuft. An den oberen, geraden Abschnitt schließt sich ein unterer, nach vorne gewölbter Abschnitt an. Die Wölbung des unteren Abschnitts ist so gewählt, daß sie die frontseitige obere Kante der Rückenlehne (3) leicht geschwungen überdeckt und daß das untere Ende (24) des unteren Abschnitts leicht auf der Frontseite der Rückenlehne (3), vorzugsweise etwas unterhalb der Höhe der Halslordose, aufliegt. Wird der Hubzylinder (21) betätigt, so wird die vordere Trägerplatte (23) zusammen mit den auf ihr angebrachten, oben genannten Komponenten der erfindungsgemäßen Kopfstütze nach vorne bewegt.
Zur Vermeidung eines unbeabsichtigten Vorschwingens des unteren Teils einer derartigen Kopfstütze im Falle eines Frontalaufpralls kann der Anbringungsort des Hubzylinders (21) so tief gewählt werden, daß der Schwerpunkt der vorderen Trägerplatte (23) oberhalb dieses Anbringungsortes liegt. Alternativ oder zusätzlich hierzu ist es möglich, eine Sicherungsleine (25) beispielsweise zwischen dem senkrechten Halteelement (8) und dem unteren Abschnitt der vorderen Trägerplatte (23) anzubringen.

Anstelle der Hubzylinder (21) kann ein durch einen Gasgenerator oder einen Druckbehälter befüllbarer Luftsack zum Einsatz kommen.

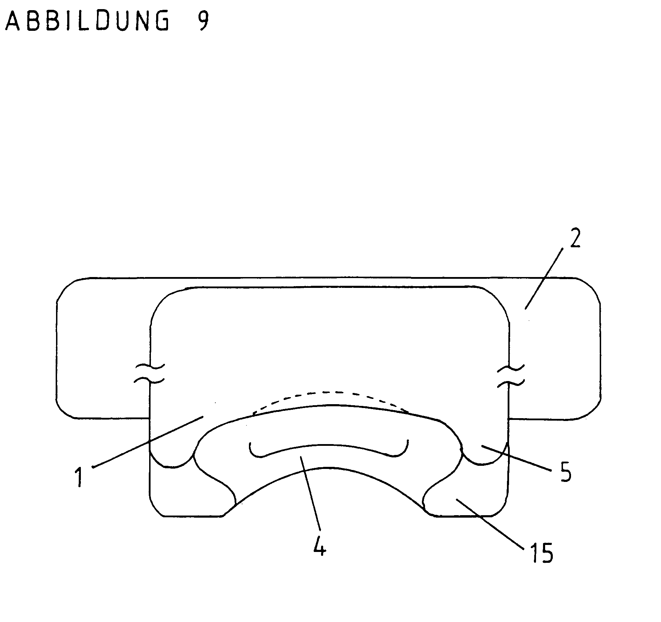

Abbildung 9 stellt eine schematische Draufsicht auf eine erfindungsgemäße Kopfstütze mit einer einstückigen Kombination des oberen Stützkörpers (1) und des unteren Stützkörpers (4) dar. Auch die oberen und unteren Seitenführungen (5, 15) sind harmonisch in diese Kombination integriert. Der obere Vorsprung (14) ist nicht dargestellt.

Aus dem bisher Gesagten geht hervor, daß die aktivierbaren Bestandteile (oberer Vorsprung (14), obere Seitenführungen (5), unterer Stützkörper (4) und untere Seltenführungen (15)) durch Pumpen oder Kolbenhubzylinder und dergleichen aktiviert werden können.

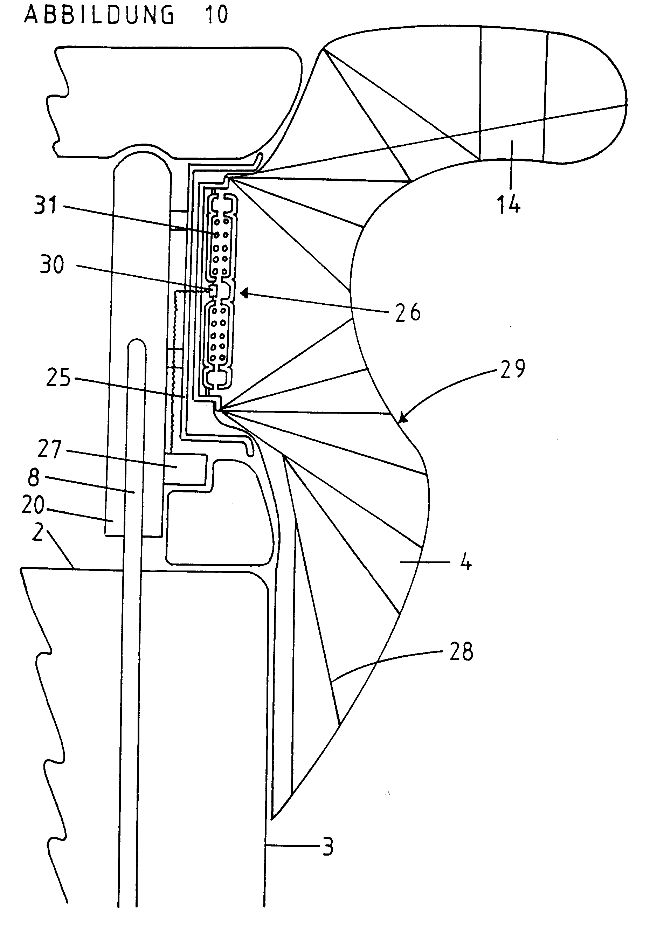

Abbildung 10 zeigt nun, daß alle diese Bestandteile gleichzeitig durch einen Gasgenerator aktivierbar sind. In einem schalenförmigen Generatorträger (25), der beispielsweise an der hinteren Trägerplatte (20) befestigt ist, steht ein handelsüblicher, zum Beispiel mit Natriumacid-pellets (31) befüllter Gasgenerator (26) über eine zum Beispiel mit Schwarzpulver gefüllte Zündpille (30) mit einer mechanischen oder elektrischen (27) Auslöse-Sensorik in Verbindung. Wird ein vorgegebener Schwellenwert der Beschleunigung überschritten, löst die Auslöse-Sensorik den Gasgenerator (26) aus. (Alternativ zu einem Gasgenerator kann selbstverständlich ein Druckgasbehälter zum Einsatz kommen). Das entstehende Gas bläst den Luftsack (29) in kürzester Zeit (ca. 10 bis 60 Millisekunden) vollständig auf. Hierdurch wird der Luftsack (29) in die in Abbildung 10 dargestellte Form gebracht, die einen oberen dachförmigen Vorsprung (14), gegebenenfalls zwei hier nicht dargestellte obere Seitenführungen (5), einen unteren Stützkörper (4) und gegebenenfalls zwei untere, ebenfalls nicht dargestellte Seitenführungen (15) in einer einstückigen Kombination umfaßt.
Um zu gewährleisten, daß der Luftsack die gewünschte Form einnimmt, werden vorzugsweise Fangbänder (28) entsprechender Länge an geeigneten Positionen an den Innenwänden des Luftsacks (29) angebracht (siehe Abbildung 10).
Der Luftsack (29) besteht in der Regel aus einem gewebten Garn, beispielsweise Polyamid 6.6 (Nylon). Ein typisches Gewebe ist 940 dtex Nylon, Einstellung 12/12 Fd/cm. Es können beschichtete und/oder unbeschichtete Gewebe zum Einsatz kommen, die gasdicht oder gasdurchlässig sind. Vorzugsweise ist auch die dem Fond zugewandte Rückseite des oberen Stützkörpers (1) so ausgestaltet, daß sie einen durch einen Gasgenerator oder einen Druckgasbehälter aufblasbaren kissenförmigen Luftsack hervorbringen kann. Dieser erstreckt sich gegebenenfalls bis in den Kniebereich nach unten und seitlich soweit, daß er entweder mit der Fahrzeugwand oder dem Luftsack des benachbarten Sitzes in Kontakt kommt. Auf diese Weise wird wirksam verhindert, daß im Falle eines Frontalaufpralls Fondpassagiere an der Kopfstütze vorbei nach vorne katapultiert werden.

Eine weitere Besonderheit einer bevorzugten Ausführungsform der erfindungsgemäßen Kopfstütze liegt darin, daß die Frontbereiche insbesondere des oberen Stützkörpers (1), des unteren Stützkörpers (4) und der Seitenführungen (5, 15) gegebenenfalls so ausgestaltet sind, daß sie durch ein leichtes Andrücken des Kopfes oder des Halsbereichs in die gewünschte Form gebracht werden können und daß diese Form anschließend 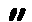 eingefroren" und dadurch gespeichert werden kann.

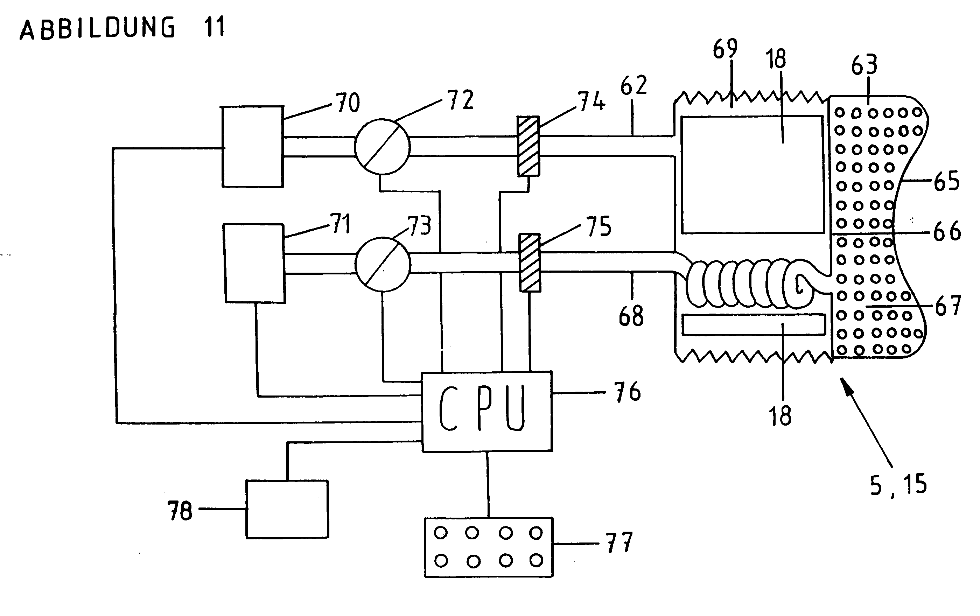

Abbildung 11 zeigt stellvertretend für alle anderen aktivierbaren Bestandteile eine derartige, isolierte Seitenführung (5, 15), deren Lokalisierung innerhalb der erfindungsgemäßen Kopfstütze in Abbildung 4 dargestellt ist.
Die jeweilige Frontfläche ist doppelschichtig ausgebildet, wobei die Schichten (65, 66) etwa 0,5 bis 10 cm voneinander beabstandet sind. Zwischen die beiden Schichten (65, 66) sind kleine Feststoffteilchen (63) wie Styroporkugeln eingelagert. Herrscht zwischen den beiden Schichten (65, 66) Umgebungsdruck, können die kugelförmigen Styroporteilchen (63) mühelos gegeneinander verschoben werden. Sind sie durch leichtes Andrücken von Hals oder Kopf in die richtige Position gebracht, wird ein leichter Unterdruck in diesem Zwischenraum (67) über eine Leitung (68) angelegt und beibehalten. Die Styroporkügelchen werden nun durch den Umgebungsluftdruck aneinander gepreßt und sind nur mühsam gegeneinander verschiebbar. Hierdurch wird die gewünschte Form des Frontbereichs 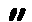 eingefroren".

Anstelle des Anlegens eines Unterdrucks in der Kammer (67) kann ein Gel, beziehungsweise ein Harz oder dergleichen zur Fixierung der kugelförmigen Teilchen (63) über den Anschluß (68) zugeführt werden.
Es ist auch möglich, einen elektrisch heizbaren Widerstandsdraht in der Kammer (67) vorzusehen, der ein dort befindliches thermoplastisches Material in dem Ausmaß erwärmen kann, daß es verformbar wird und der Kopf- und/oder Halsregion exakt angepaßt werden kann. Durch das anschließende Abkühlen wird die gewünschte Form 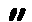 eingefroren". Vorzugsweise ist das thermoplastische Füllmaterial der frontseitigen Kammer (67) auch in abgekühltem Zustand zumindest etwas elastisch.

Der Anschluß (68) der frontseitigen Kammer (67) ist vorzugsweise in Längsrichtung dehnbar ausgebildet, zum Beispiel in Form einer Spirale, damit bei einer Expansion der rückwärtigen Kammer (69), in der gegebenenfalls ein Schaumstoffkörper (18) untergebracht ist, der Druck oder der Unterdruck in der frontseitigen Kammer (67) aufrecht gehalten werden kann.

Wie in Abbildung 11 dargestellt, können der Anschluß (62) der rückwärtigen Kammer (69) und der Anschluß (68) der frontseitigen Kammer (67) mit der gleichen Pumpe oder mit voneinander verschiedenen Pumpen (70, 71) in Verbindung stehen. Um einen permanenten Betrieb der Pumpen (70, 71) zu vermeiden, können in den Anschlußleitungen (62, 68) Absperrventile (72, 73)vorgesehen werden, die nach dem Erreichen des Solldruckes geschlossen werden oder sich selbständig schließen. In einer besonders bevorzugten Ausführungsform sind zwischen die jeweiligen Kammern (67, 69) und die entsprechenden Absperrventile (72, 73) Druckmeßvorrichtungen (74, 75) geschaltet.

Die Pumpen (70, 71), die Absperrventile (72, 73) und die Druckmeßvorrichtungen (74, 75) sind in der Regel so ausgebildet, daß sie elektrisch betrieben beziehungsweise angesteuert werden. In diesem Fall ist es besonders vorteilhaft, jedes dieser Bauteile zu Ansteuerungszwecken mit einer zentralen Verarbeitungseinheit (76, CPU) zu verbinden. An diese zentrale Verarbeitungseinheit (76) wird ferner eine Eingabeeinrichtung (77), zum Beispiel ein Ensemble tastaturförmiger Bedienungsschalter, angeschlossen. Die Pumpen (70, 71), die Absperrventile (72, 73), die Druckmeßvorrichtungen (74, 75) und die zentrale Verarbeitungseinheit (76) werden darüberhinaus mit einer Quelle für elektrische Energie verbunden.

Über die Tastatur (77) können nun einerseits die Soll-Werte für die Druckverhältnisse in den Kammern (69, 67) eingegeben werden. Die Druckmeßvorrichtungen (74, 75) ermitteln in diesem Falle den Ist-Wert und melden ihn an die zentrale Verarbeitungseinheit (76). Dort wird der Ist-Wert mit dem Soll-Wert verglichen.
Liegt der Ist-Wert unter dem Soll-Wert, aktiviert die zentrale Verarbeitungseinheit (76) die entsprechende Pumpe (70, 71) und öffnet solange das zugehörige Absperrventil (72, 73), bis der von der Druckmeßeinrichtung (74, 75) an die zentrale Verarbeitungseinheit (76) gemeldete Ist-Wert dem Soll-Wert entspricht. Entspricht der Ist-Wert dem Soll-wert, schließt die zentrale Verarbeitungseinheit (76) das entsprechende Absperrventil (74, 75) und schaltet die zugehörige Pumpe (70, 71) ab.
Liegt der Ist-Wert oberhalb des Soll-Wertes, so öffnet die zentrale Verarbeitungseinheit (76) das Absperrventil (73, 72) solange, bis der Ist-Wert dem Sollwert entspricht.

Gegebenenfalls steht die zentrale Verarbeitungseinheit (76) mit einem Speicher (78) in Verbindung. In diesem Fall ist es möglich, personenabhängige Soll-Werte in dem Speicher (76) abzulegen und die automatische Einstellung des entsprechenden Ist-Wertes zum Beispiel durch Eingabe einer Identifikationsnummer oder eines Zahlencodes zu bewirken. In einer besonders bevorzugten Ausführungsform der vorliegenden Erfindung stehen alle oder mehrere der aktivierbaren Bestandteile, die zur Aktivierung einen Überdruck benötigen, zum Beispiel mit einem durch die zentrale Verarbeitungseinheit ansteuerbaren Verteilerventil jeweils über eine eigene Versorgungsleitung in Verbindung. In jeder dieser Versorgungsleitungen befindet sich gegebenenfalls ein mit der zentralen Verarbeitungseinheit (76) gekoppeltes Druckmeßinstrument. Von dem zentralen Verteilerventil führt nur eine Leitung zur einzigen Überdruck liefernden Pumpe (70). Für diejenigen Bestandteile, die zur Aktivierung Unterdruck benötigen, gelten diese Ausführungen entsprechend.
In dem Speicher (78) kann nun für jeden Nutzungsberechtigten ein Satz von Sollwerten für mehrere aktivierbare Bestandteile abgelegt werden. Bei einem Fahrerwechsel kann durch die Eingabe einer Codezahl sehr einfach und schnell die erfindungsgemäße Kopfstütze automatisch individuell angepaßt werden.

Über die tastaturförmige Eingabeeinrichtung (77) können andererseits die Pumpen (70, 71), gegebenenfalls zusammen mit den Absperrventilen (72, 73), direkt angesteuert werden. In diesem Falle kann man auf die Druckmeßvorrichtungen verzichten. Zur Vermeidung einer Überlastung der Pumpen (70, 71) und von Schäden an den Wandungen (60) der Zelle, empfiehlt sich die Verwendung einer Überlastsicherung der Pumpen (70, 71).
In einer besonders bevorzugten Ausführungsform ist die tastaturförmige Eingabeeinrichtung (77) in das Tastaturfeld derjenigen Eingabeeinrichtung integriert, die zur Steuerung der übrigen Funktionen des Sitzes dient (zum Beispiel: Höhenverstellung der Kopfstütze, Höhenverstellung des Sitzes, Sitzklimatisierung in Sitzkissen und Lehne, Sitzheizung, Sitzflächen-Neigungseinstellung, Sitzflächen-Verlängerungseinstellung, Sitzflächentiefeneinstellung, Lendenwirbelsäulenunterstützung, Schwinghubeinstellung und Rückenlehnenneigungseinstellung). In diesem Fall befindet sich die Eingabeeinrichtung (77) vorzugsweise am Sitz, beispielsweise seitlich von der Oberschenkelauflage, auf der Mittelkonsole zwischen den Sitzen oder am Armaturenbrett.

Eingangs wurde ausgeführt, daß der obere Stützkörper (1) gegenüber der Oberkante (2) der Rückenlehne (3) höhenverstellbar ist.
Die Höhenverstellbarkeit des oberen Stützkörpers kann grundsätzlich auf 2 Weisen erfolgen: entweder das senkrechte Halteelement (8) ist in der Rückenlehne (3) vertikal verschiebbar gelagert oder der obere Stützkörper (1) ist auf dem feststehenden Halteelement (8) vertikal verschiebbar angebracht.

Im ersten Fall kann das Halteelement (8) beispielsweise in einem senkrechten Führungsrohr in der Rückenlehne geführt werden. Die vertikale Verschiebung des Halteelements (8) erfolgt vorzugsweise durch einen hydraulisch oder pneumatisch angetriebenen Hubzylinder, der senkrecht nach oben wirkend im unteren Teil des das Halteelement (8) umgreifenden Führungsrohrs angeordnet ist. Alternativ hierzu kann das Halteelement (8) auch durch eine rotativ angetriebene Schnecke vertikal bewegt werden, die in einen mit einer Zahnung versehenen Abschnitt des Halteelements (8) eingreift.

In einer besonders bevorzugten Ausführungsform der vorliegenden Erfindung kann der obere Stützkörper (1) im Falle der Einwirkung von oberhalb eines Schwellenwertes liegenden Beschleunigungskräften schlagartig in eine besonders hochliegende Endposition gebracht werden. Zu diesem Zweck steht der erwähnte Hubzylinder in dem Führungsrohr mit einem separaten Gasgenerator oder Druckgasbehälter in Verbindung, die jeweils mit einer entsprechenden Auslöse-Sensorik gekoppelt sind. Das Halteelement (8) kann im wesentlich gasdicht in dem Führungsrohr geführt werden. In diesem Fall wirken der Gasgenerator oder der Druckgasbehälter auf den unteren Abschnitt des Führungsrohres ein. Durch das Hochfahren des oberen Stützkörpers (1) unmittelbar nach dem Einwirken entsprechender Beschleunigungskräfte wird auf besonders effektive Weise dem Entstehen von Schleudertraumen entgegengewirkt.
Daneben sind bekannte Höhenverstellungsmechanismen verwendbar, die beispielsweise mit Hilfe einer in der Oberkante (2) der Rückenlehne (3) verankerten Federklammer, die in eine Rasterung des Halteelements (8) in diesem Bereich eingreift, eine Arretierung des Halteelements (8) in einer beStimmten Höhe bewirken.

Im zweiten Fall kann der obere Stützkörper (1) gegenüber dem feststehenden Halteelement (8) ebenfalls durch einen pneumatisch oder hydraulisch betriebenen Hubzylinder, der senkrecht wirkend in einem das obere Ende des Halteelements (8) umfassenden Führungsrohr angebracht ist, vertikal verschoben werden. Auch in diesem Fall kann der Hubzylinder zum schlagartigen Hochfahren des oberen Stützkörpers (1) im Falle des Einwirkens von oberhalb eines bestimmten Schwellenwertes liegenden Beschleunigungskräften mit einem Gasgenerator oder Druckgasbehälter mit entsprechender Auslöse-Sensorik in Verbindung stehen.

Wird eine rein mechanische Höhenverstellbarkeit der erfindungsgemäßen Kopfstütze gewünscht, so kann diese durch die Anbringung eines über einen Wippmechanismus beweglichen Raststiftes, der in auf dem Halteelement (8) vorgesehene Rastkerben eingreift, mühelos erreicht werden.

Vorzugsweise sind in beiden Fällen die Hubzylinder mit Mitteln ausgestattet, die mit der zentralen Verarbeitungseinheit (76) in Verbindung stehen und dieser die aktuelle Höhe des oberen Stützkörpers (1) signalisieren. Bei derartigen Mitteln handelt es sich beispielsweise um Durchflußmesser.

Aus den bisherigen Ausführungen geht hervor, daß die gesamte erfindungsgemäße Kopfstütze, einschließlich ihrer Höhenverstellung, pneumatisch betrieben werden kann. Aus diesem Grunde kann zum Beispiel unter dem Fahrersitz ein zentraler Druckluft-Tank vorgesehen werden. Gegebenenfalls kann dieser Tank mit einem Reifen-Ventil ausgestattet werden, der ein problemloses Nachfüllen des Tanks an einer Tankstelle erlaubt.

Medien, die zur Füllung der aktivierbaren Bestandteile insbesondere geeignet sind, sind Gase wie zum Beispiel Luft, Stickstoff, halogenierte Kohlenwasserstoffe wie Fluorchlorkohlenwasserstoffe (zum Beispiel Frigen), Kohlendioxid oder Kohlenmonoxid, Flüssigkeiten wie Wasser, Öle, Alkohole, Flüssigkeiten mit einer besonders hohen oder mit einer besonders niedrigen Viskosität, thermoplastische Flüssigkeiten oder duroplastische Flüssigkeiten (Harze), Feststoffe wie kugelförmige kleine Teilchen zum Beispiel aus Styropor, pulverförmige Feststoffe oder Mischungen hiervon wie Gele, Schäume oder dergleichen.

Grundsätzlich ist festzustellen, daß jeder aktivierbare Bestandteil in Abhängigkeit von den anderen aktivierbaren Bestandteilen oder unabhängig von diesen mit dem gleichen oder mit einem unterschiedlichen Medium befüllt werden kann.

Die Unterbringung der Pumpen (70, 71), der Absperrventile (72, 73), der Druckmeßvorrichtungen (74, 75) und der zentralen Verarbeitungseinheit (76) erfolgt in der Regel in der geräumigen Rückenlehne des Sitzes. Kommen jedoch derzeit noch etwas teurere miniaturisierte Bauteile zur Anwendung, so ist es ohne weiteres möglich, diese zentral im Inneren der erfindungsgemäßen Kopfstütze unterzubringen. Zur Aufnahme der genannten Bauteile können zum Beispiel in einer senkrechten Trägerplatte (20), die zwischen dem vorderen Bereich und dem rückwärtigen Bereich der Kopfstütze vorgesehen ist, an die Form der Bauteile angepaßte Aussparungen ausgebildet sein. Selbstverständlich ist es jedoch auch möglich, die Bauteile auf der Oberfläche der Trägerplatte (20) anzubringen. Zur Vermeidung einer Beschädigung der Zelle durch hervorstehende Bauteile wird vorzugsweise eine Abpolsterung, zum Beispiel aus Schaumstoffmaterial, zwischen den Bauteilen und der der Trägerplatte (20) zugewandten Seite der Zelle vorgesehen.
Insbesondere unter dem Aspekt einer einfachen Nachrüstbarkeit ist die Unterbringung der Bauteile ausschließlich innerhalb der Kopfstütze selbst von großem Vorteil.

Die Stromversorgung der zentralen Verarbeitungseinheit (76), der Pumpen (70, 71), der Absperrventile (72, 73) und gegebenenfalls der Druckmeßeinrichtungen (74, 75) und der Motoren zur Höhenverstellung der Halteelemente (8) kann durch eine Batterie oder einen Akkumulator erfolgen, die ebenfalls in der Kopfstütze entnehmbar eingebaut sind. Selbstverständlich ist eine Energieversorgung über eine Batterie oder einen Akkumulator möglich, die in der Rückenlehne untergebracht sind. Gegebenenfalls ist eine Stromversorgung aus dem Bordnetz besonders vorteilhaft.

Wird eine individuelle Anpaßbarkeit der Kopfstütze beispielsweise aus Gewichts-, Platz- oder Kostengründen nicht für erforderlich befunden, so kann auf fest mit den Anschlüssen (62, 68) der Kammern (69, 67) verbundene Pumpen (70, 71) verzichtet werden. In diesem Fall werden die Kammern mit einer separaten, mobilen Pumpe in einem solchen Ausmaß einmalig befüllt, daß die Form und die Dämpfungseigenschaften der Zelle dem gewünschten Wert entsprechen. Nachfolgend werden die Anschlußleitungen (62, 68) von der separaten Pumpe getrennt und reversibel oder irreversibel dicht verschlossen.

Das Material der Wandungen der aktivierbaren Bestandteile ist vorzugsweise flüssigkeits- und/oder gasdicht, flexibel und zumindest etwas dehnbar.

Vorzugsweise wird die erfindungsgemäße Kopfstütze mit all ihren Bestandteilen von einem knapp sitzenden elastischen Schutzüberzug umhüllt, der farblich an die Polsterung des Fahrzeugs angepaßt sein kann und aus einem hautfreundlichen, atmungsaktiven Material besteht. Nötigenfalls kann er an bestimmten Stellen Sollbruchstellen in Form von Reißnähten aufweisen.

## Patentansprüche

1. Kopfstütze für Sitze mit Rückenlehne mit einem oberen Stützkörper (1), der in Verlängerung der Rückenlehne (3) oberhalb der Oberkante (2) der Rückenlehne (3) in Kopfhöhe vorgesehen ist und dessen Längsachse (6) horizontal ausgerichtet ist und parallel zur Längsachse (7) der Rückenlehne (3) verläuft, wobei die Unterseite des oberen Stützkörpers (1) mit der Oberkante (2) der Rückenlehne (3) in Kontakt steht oder von dieser beabstandet ist,
**dadurch gekennzeichnet**, daß auf der Frontseite (9) des oberen Stützkörpers (1) und/oder in diese integriert mindestens zwei horizontal voneinander beabstandete Mittel (5) zur seitlichen Abstützung des Kopfes vorgesehen sind und daß in Höhe der Halslordose eines Sitzenden ein unterer, im wesentlichen zylindrischer Stützkörper (4) zur Abstützung der Halswirbelsäule angebracht ist, der bei seitlicher Betrachtung eine im wesentlichen runde, ovale, längliche oder halbkreisförmige Querschnittsfläche aufweist und dessen Längsachse (13) horizontal ausgerichtet ist und parallel zur Längsachse (6) des oberen Stützkörpers (1) verläuft, wobei auf der Frontseite des unteren Stützkörpers (4) und/oder in diese integriert mindestens zwei horizontal voneinander beabstandete Mittel (15) zur seitlichen Abstützung der Halswirbelsäule vorgesehen sind.

2. Kopfstütze nach Anspruch 1, dadurch gekennzeichnet, daß der obere Stützkörper (1) im oberen Bereich einen Vorsprung (14) aufweist, der sich wulst- oder dachförmig in Richtung des Sitzenden erstreckt.

3. Kopfstütze nach einem der Ansprüche 1 oder 2, dadurch gekennzeichnet, daß die oberen und/oder unteren Seitenführungen (5, 15) und/oder der obere Vorsprung (14) und/oder der untere Stützkörper (4) jeweils so ausgestaltet sind, daß ihre Form und das Ausmaß ihrer Erhebung veränderbar sind.

4. Kopfstütze nach Anspruch 3, dadurch gekennzeichnet, daß an den Innenwänden der Seitenführungen (5, 15) und/oder des Vorsprungs (14) und/oder des unteren Stützkörpers (4) Fangbänder (28) und/oder Wandverstärkungen zur Einhaltung der vorgegebenen Anmessungen angebracht sind.

5. Kopfstütze nach Anspruch 3 oder 4, dadurch gekennzeichnet, daß die oberen und/oder unteren Seitenführungen (5, 15) und/oder der obere Vorsprung (14) und/oder der untere Stützkörper (4) jeweils einen zumindest teilweise verformbaren Hohlkörper umfassen, der mit einem festen, flüssigen oder gasförmigen Medium oder mit einer Mischung hiervon befüllbar ist, wobei die Form und das Ausmaß der Erhebung des verformbaren Hohlkörpers durch den Innendruck bestimmbar sind.

6. Kopfstütze nach Anspruch 3 oder 4, dadurch gekennzeichnet, daß die oberen und/oder unteren Seitenführungen (5, 15) und/oder der obere und/oder der untere Stützkörper (1, 4) jeweils eine zumindest etwas starre Frontfläche (17) aufweisen, die über mindestens ein Antriebsmittel (21), das mittelbar oder unmittelbar mit der Rückenlehne in Verbindung steht, rechtwinklig zur Längsachse (6, 13) der Stützkörper (1, 4) im wesentlichen horizontal verschiebbar ist.

7. Kopfstütze nach einem der vorhergehenden Ansprüche, dadurch gekennzeichnet, daß das Medium zur Befüllung der aktivierbaren Bestandteile (5, 15, 14, 4) und/oder zum Betreiben des Antriebsmittels (21) über mindestens eine Pumpe (70, 71), einen Druckgasbehälter oder einen Gasgenerator (26) zugeführt wird.

8. Kopfstütze nach einem der vorhergehenden Ansprüche, dadurch gekennzeichnet, daß zumindest der obere Stützkörper (1) und der untere Stützkörper (4) in Form einer einstückigen Kombination ausgebildet sind, deren Frontkontur bei seitlicher Betrachtung im wesentlichen S-förmig verläuft.

9. Kopfstütze nach einem der vorhergehenden Ansprüche, dadurch gekennzeichnet, daß sie einen kapuzenartigen, an die Form des oberen Stützkörpers (1) und des oberen Teils der Rückenlehne (3) angepaßten Überzug umfaßt, der an der jeweiligen Position einen entsprechenden aktivierbaren Bestandteil (5, 15, 14, 4) aufweist.

10. Kopfstütze nach einem der vorhergehenden Ansprüche, dadurch gekennzeichnet, daß sie einen mittels eines Druckgasbehälters oder Gasgenerators (26) aufblasbaren Luftsack (29) umfaßt, der einen dachförmigen Vorsprung (14) und/oder mindestens zwei Mittel (5) zur seitlichen Abstützung des Kopfes und/oder einen unteren Stützkörper (4) und/oder mindestens zwei Mittel (15) zur seitlichen Abstützung der Halswirbelsäule aufweist.

11. Kopfstütze nach einem der vorhergehenden Ansprüche, dadurch gekennzeichnet, daß die Frontfläche der aktivierbaren Bestandteile (5, 15, 14, 4) doppelschichtig ausgebildet ist, wobei in dem Zwischenraum zwischen diesen Schichten kugelförmige Feststoffteilchen eingelagert sind und wobei dieser Zwischenraum unter Umgebungsdruck oder Unterdruck steht.

12. Kopfstütze nach einem der vorhergehenden Ansprüche, dadurch gekennzeichnet, daß die zum Betreiben der aktivierbaren Bestandteile (5, 15, 14, 4) erforderlichen Pumpen (70, 71), Absperrventile (72, 73), Druckmeßeinrichtungen (74, 75) und, im Falle des Vorhandenseins von Hubzylindern (21), Durchflußmesser mit einer zentralen Verarbeitungseinheit (76) in Verbindung stehen, an die zusätzlich zumindest ein Speicher (78) und eine Eingabeeinrichtung (77) angeschlossen sind, so daß personenbezogene Sollwerte in dem Speicher (78) ablegbar und automatisch zu Istwerten umsetzbar sind.

13. Kopfstütze nach einem der vorhergehenden Ansprüche, dadurch gekennzeichnet, daß sie mit Hilfe einer vertikal wirkenden Feder oder eines mittels eines Druckgasbehälters oder Gasgenerators befüllbaren Hubzylinders oder Luftsacks beim Einwirken von oberhalb eines bestimmten Schwellenwertes liegenden Beschleunigungskräften schlagartig in eine besonders hoch liegende Endposition fährt.

## Claims

1. A head restraint for seats with a seat back with an upper support body (1) which is provided in the extension of the seat back (3) above the upper edge (2) of the seat back (3) at head height, and with the longitudinal axis (6) aligned horizontally and parallel to the longitudinal axis (7) of the seat back (3), whereby the underside of the upper support body (1) is in contact with, or spaced apart from, the upper edge (2) of the seat back (3), characterised in that at least two horizontally spaced apart means (5) for lateral support of the head are provided at the front (9) of the upper support body (1) and/or integrated into it, and that at the height of the cervical lordosis of a seated person a lower, essentially cylindrical support body (4) for supporting the cervical spine is attached; when viewed from the side, the cross-section of the said support body (4) is essentially round, oval, elongated or semicircular in shape, and the longitudinal axis (13) of the said support body (4) is aligned horizontally and parallel to the longitudinal axis (6) of the upper support body (1) whereby at the front of the lower support body (4) and/or integrated into the said front, at least two horizontally spaced apart means (15) for lateral support of the cervical spine are provided.

2. A head restraint according to claim 1, characterised in that the upper support body (1) in the upper area comprises a projecting part (14) which extends in the shape of a roof or bulge in the direction of the person seated.

3. A head restraint according to one of claims 1 or 2, characterised in that the upper and/or lower lateral guides (5, 15) and/or the upper projecting part (14) and/or the lower support body (4) are designed in such a way that the shape and extent of their elevation are variable.

4. A head restraint according to claim 3, characterized in that retaining straps (28) and/or wall reinforcements are provided at the interior walls of the lateral guides (5, 15) and/or the projecting part (14) and/or the lower support body (4), in order to maintain the pre-set dimensions.

5. A head restraint according to claim 3 or 4, characterized in that the upper and/or lower lateral guides (5, 15) and/or the upper projecting part (14) and/or the lower support body (4) each comprise an at least partially deformable hollow space which can be filled with a solid, liquid or gaseous medium or with a mixture hereof; whereby the shape and dimensions of the elevation of the deformable hollow space can be determined by the internal pressure.

6. A head restraint according to claim 3 or 4, characterised in that the upper and/or lower lateral guides (5, 15) and/or the upper and/or the lower support body (1, 4), each comprises an at least somewhat rigid frontal area (17) which is connected by way of at least one propelling means (21) which directly or indirectly communicates with the seat back; with the said rigid frontal area (17) essentially being horizontally movable, at a right angle to the longitudinal axis (6, 13) of the support body (1, 4).

7. A head restraint according to one of the preceding claims, characterized in that the medium for filling the activatable components (5, 15, 14, 4) and/or for employing the propelling means (21) is supplied by way of at least one pump (70, 71), a pressure-gas cylinder or a gas generator (26).

8. A head restraint according to one of the preceding claims, characterised in that at least the upper support body (1) and the lower support body (4) are designed as a one-piece combination whose front contour, when viewed from the side, is essentially S-shaped.

9. A head restraint according to one of the preceding claims, characterised in that it comprises a hood-like cover matched to the shape of the upper support body (1) and the upper part of the seat back (3); the said hood-like cover comprising a respective activatable component (5, 15, 14, 4) at the respective positions.

10. A head restraint according to one of the preceding claims, characterised in that it comprises an airbag (29) inflatable by means of a pressure-gas cylinder or gas generator (26); the said airbag (29) comprising a roof-like projecting part (14) and/or at least two means (5) for lateral support of the head and/or a lower support body (4) and/or at least two means (15) for lateral support of the cervical spine.

11. A head restraint according to one of the preceding claims, characterised in that the frontal area of the activatable components (5, 15, 14, 4) is constructed in two layers whereby in the space between these layers solid spherules are embedded and whereby this intermediate space is subjected to ambient pressure or negative pressure.

12. A head restraint according to one of the preceding claims, characterised in that the pumps (70, 71), stop valves (72, 73), pressure measuring devices (74, 75) - and if lifting cylinders (21) are installed also flow meters - required to operate the activatable components (5, 15, 14, 4) are communicating with a central processing unit (76) to which additionally at least one memory (78) and an input device (77) are connected, so that desired values relating to a person can be stored in the memory (78) and can automatically be converted to actual values.

13. A head restraint according to one of the preceding claims, characterised in that it moves up instantly into a particularly elevated final position, by means of a vertically-acting spring or by means of a lifting cylinder or airbag that can be filled by a pressure-gas cylinder or gas generator, if acceleration forces above a certain threshold value are encountered.

## Revendications

1. Appui-tête pour sièges à dossier, comprenant un corps d'appui supérieur (1) prévu dans le prolongement du dossier (3) au-dessus du bord supérieur (2) du dossier (3), à hauteur de la tête, et dont l'axe longitudinal (6) est orienté horizontalement et s'étend parallèlement à l'axe longitudinal (7) du dossier (3), la face inférieure du corps d'appui supérieur (1) étant en contact avec le bord supérieur (2) du dossier (3) ou espacé dudit bord, caractérisé en ce que sur la face frontale (9) du corps d'appui supérieur (1) et/ou intégrés dans celui-ci, on a prévu au moins deux moyens (5) horizontalement espacés l'un de l'autre, destinés à soutenir la tête latéralement, et en ce qu'à hauteur de la lordose dorsale d'une personne assisé, on a prévu un corps d'appui inférieur (4) sensiblement cylindrique, destiné à soutenir la colonne cervicale, lequel présente, vu de côté, une face de section transversale sensiblement ronde, ovale, oblongue ou demi-circulaire, et dont l'axe longitudinal (13) est orienté horizontalement et s'étend parallèlement à l'axe longitudinal (6) du corps d'appui supérieur (1), siège dans lequel on a prévu au moins deux moyens (15) horizontalement espacés l'un de l'autre et destinés au soutien latéral de la colonne cervicale, sur la face frontale du corps d'appui inférieur (4) et/ou intégrés dans celui-ci.

2. Appui-tête selon la revendication 1, caractérisé en ce que le corps d'appui supérieur (1) présente, dans la zone supérieure, une avancée (14) qui s'étend dans la direction de la personne assise, en formant un bourrelet ou un toit.

3. Appui-tête selon l'une des revendications 1 ou 2, caractérisé en ce que les guides latéraux (5, 15) supérieurs et/ou inférieurs et/ou l'avancée supérieure (14) et/ou le corps d'appui inférieur (4) sont tous configurés de façon à ce que leur forme et l'amplitude de leur soulèvement soient variables.

4. Appui-tête selon la revendication 3, caractérisé en ce que sur les parois internes des guides latéraux (5, 15) et/ou de l'avancée (14) et/ou du corps d'appui inférieur (4) on a prévu des bandes de garde (28) et/ou des renforcements de parois pour respecter les dimensions prédéfinies.

5. Appui-tête selon la revendication 3 ou 4, caractérisé en ce que les guides latéraux supérieurs et/ou inférieurs (5, 15) et/ou l'avancée supérieure (14) et/ou le corps d'appui inférieur (4) comprennent tous un corps creux au moins partiellement déformable pouvant être rempli d'un milieu solide, liquide ou gazeux ou un mélange de tels milieux, la forme et l'amplitude du soulèvement du corps creux déformable pouvant être déterminées par la pression interne.

6. Appui-tête selon la revendication 3 ou 4, caractérisé en ce que les guides latéraux supérieurs et/ou inférieurs (5, 15) et/ou le corps d'appui supérieur ou inférieur (1, 4) présentent tous une face frontale (17) au moins sensiblement rigide, qui peut être déplacée sensiblement à l'horizontale perpendiculairement à l'axe longitudinal (6, 13) des corps de soutien (1, 4), à l'intervention d'au moins un organe d'entraînement (21) qui est indirectement ou directement en relation avec le dossier.

7. Appui-tête selon l'une des revendications qui précèdent, caractérisé en ce que le milieu devant remplir les composants activables (5, 15, 14, 4) et/ou actionner l'organe d'entraînement (21) est apporté par au moins une pompe (70, 71), un réservoir de gaz sous pression ou un gazogène (26).

8. Appui-tête selon l'une des revendications qui précèdent, caractérisé en ce qu'au moins le corps d'appui supérieur (1) et le corps d'appui inférieur (4) sont réalisés sous forme de combiné monobloc dont le contour frontal, vu de côté, évolue sensiblement en forme de S.

9. Appui-tête selon l'une des revendications qui précèdent, caractérisé en ce qu'il comprend une housse en forme de capuche adaptée à la forme du corps d'appui supérieur (1) et de la partie supérieure du dossier (3) et qui présente, à l'endroit concerné, un composant activable correspondant (5, 15, 14, 4).

10. Appui-tête selon l'une des revendications qui précèdent, caractérisé en ce qu'il comprend un air-bag (29) gonflable à l'aide d'un réservoir de gaz sous pression ou d'un gazogène (26), et qui présente une avancée en forme de toit (14) et/ou au moins deux moyens (5) destinés à soutenir la tête latéralement et/ou un corps d'appui inférieur (4) et/ou au moins deux moyens (15) destinés à soutenir latéralement la colonne cervicale.

11. Appui-tête selon l'une des revendications qui précèdent, caractérisé en ce que la surface frontale des composants activables (5, 15, 14, 4) est à double couche, des particules de matières solides sphériques étant insérées dans l'espace séparant ces deux couches, et cet espace intermédiaire étant tenu à la pression ambiante ou en dépression.

12. Appui-tête selon l'une des revendications qui précèdent, caractérisé en ce que les pompes (70, 71), les soupapes d'arrêt (72, 73), les dispositifs de mesure de pression (74, 75) et, s'il y a des vérins de levage (21), les débitmètres, nécessaires pour actionner les composants activables (5, 15, 14, 4), sont en relation avec une unité de traitement centrale (76) à laquelle sont encore raccordés au moins une mémoire (78) et un dispositif de saisie (77), de sorte que des valeurs de consigne relatives à des personnes puissent être déposées dans la mémoire (78) et converties automatiquement en valeurs réelles.

13. Appui-tête selon l'une des revendications qui précèdent, caractérisé en ce qu'il se place brusquement dans une position finale particulièrement haute sous l'influence de forces d'accélération supérieures à une valeur de seuil déterminée, à l'aide d'un ressort agissant verticalement ou d'un vérin de levage ou d'un air-bag pouvant être rempli au moyen d'un réservoir de gaz sous pression ou d'un gazogène.
